# EUROPEAN PATENT SPECIFICATION

(11) **EP 2 154 556 B1**
(45) Date of publication and mention of the grant of the patent: **23.11.2011**
(21) Application number: 08014476.9
(22) Date of filing: 14.08.2008
(51) Int. Cl.: G02B 6/44

(54) **Device for receiving a subassembly assigned to an optical fibre cable and for fastening the same to a mounting**
Vorrichtung für den Empfang einer zu einem Glasfaserkabel zugeordneten Unteranordnung und zur Befestigung derselben an einer Einrichtung
Dispositif de réception d'un sous-ensemble attribué à un câble de fibre optique et pour le fixer à un assemblage

(43) Date of publication of application: 17.02.2010
(73) Proprietor: CCS Technology, Inc., Wilmington, DE 19803 (US)
(72) Inventor: Grzegorz, Sek, 91-849 Lodz (PL)
(74) Representative: Sturm, Christoph

(56) References cited:
- DE-U1- 9 316 137
- US-A1- 2007 047 897

## Description

The invention relates to a device for receiving a subassembly assigned to an optical fibre cable and for fastening the subassembly received on the device to a mounting via the device according to the introducing portion of claim 1.

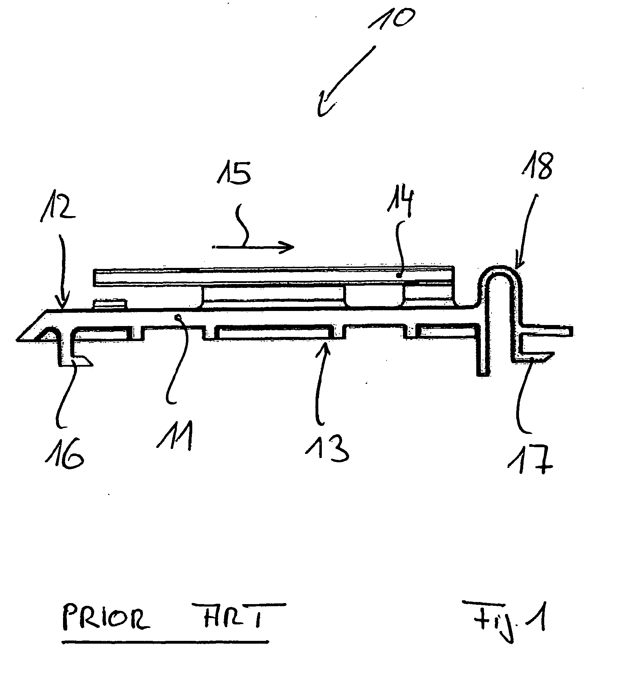

Figure 1 shows a device, known from the prior art US 2007/0047897 A1, for receiving a subassembly, in particular a furcation adaptor, assigned to an optical fibre cable and for fastening the subassembly received on the device to a mounting, particularly to a wall of a distribution panel or distribution cabinet via the device. The device 10, shown in a side view in Figure 1, has a bar-shaped basic body 11 with a topside 12 and with an underside 13. On the topside 12 of the basic body 11, a guide rail 14 is formed, which extends approximately parallel to the bar-shaped basic body 11 and onto which, to receive the subassembly assigned to the optical fibre cable, the respective subassembly can be pushed in such a way that, when the subassembly is pushed onto the guide rail 14, the guide rail 14 engages into a groove formed on the subassembly to be received. A subassembly to be received on the device 10 is pushed onto the guide rail 14 in the direction of the arrow 15 shown in Figure 1. The arrow 15 therefore indicates the direction in which a subassembly to be received by the device 10 and assigned to an optical fibre cable is pushed onto the guide rail 14.

In the region of the underside 13 of the bar-shaped basic body 11, anchoring elements 16 and 17 are formed in the region of mutually opposite ends of the basic body 11.

Thus, at the rear end of the basic body 11, as seen in the push-on direction 15, the anchoring element 16 is formed on the underside 13 of the latter, and, at the front end of the bar-shaped basic body 11, as seen in the push-on direction 15, the anchoring element 17 is formed, the device 10 according to the invention, via the two anchoring elements 16, 17, being able to be introduced into recesses of a mounting, to which the device 10, together with the subassembly received by it and assigned to the optical fibre cable, is to be fastened. According to Figure 1, in this case, the anchoring element 17 positioned at the front end, as seen in the push-on direction 15, of the bar-shaped basic body 11 is designed as an integral part of a stop 18 of U-shaped cross section, this stop 18 being effective in the push-on direction 15 and therefore, in the push-on direction 15, forming a stop for a subassembly to be pushed onto the guide rail 14.

The device 10 known from the prior art US 2007/0047897 A1 as illustrated in Figure 1, has the disadvantage that, when it is fastened via its anchoring elements 16, 17 to a mounting, for example a wall of a distribution panel or distribution cabinet, and a force is exerted on the stop 18 of U-shaped cross section via the optical fibre cable or the subassembly received by the device 10 and assigned to the optical fibre cable, the anchoring elements 16, 17 may come loose from the mounting, in that they jump out of the recesses of the mounting into which they are introduced. In this case, a secure fastening of the device 10 to the mounting is no longer ensured. This is a disadvantage.

There is therefore a need for an improved device in which there is no risk that it comes loose unintentionally from a mounting.

Proceeding from this, the problem on which the present invention is based is to provide a novel device for receiving a subassembly assigned to an optical fibre cable and for fastening the same to a mounting.

This problem is solved by means of a device according to Claim 1.

According to the invention, the U-shaped stop is designed in such a way that on the underside of the basic body a closed portion of the U-shaped stop projects with respect to the latter, in such a way that, when the subassembly received on the device is fastened to the mounting, the closed portion of the U-shaped stop can be introduced into a recess of the mounting.

In the device according to the invention, the stop of U-shaped cross section is designed in such a way that the closed portion of the latter is formed on the underside of the basic body or projects with respect to the underside of the basic body. Consequently, when the device is fastened to the mounting, the closed portion of the U-shaped stop can be introduced into a recess of the mounting. If a force is exerted in the push-on direction on the U-shaped stop via the optical fibre cable or the subassembly which is assigned to the optical fibre cable and is pushed onto the guide rail of the device, the device according to the invention arches on its underside in such a way that the anchoring elements of the latter are hooked up in the region of the recesses of the mounting, so that there is no risk that the anchoring elements of the device come loose from the recesses of the mounting. In the device according to the invention, therefore, there is no risk that it comes loose in an unwanted way from a mounting.

In the region of the topside of the basic body, an elastically deformable stop, acting opposite to the push-on direction, for the subassembly is formed at a rear end of the basic body, as seen in the push-on direction of the subassembly.

Preferred developments of the invention may be gathered from the subclaims and the following description. Exemplary embodiments are explained in more detail by means of the drawing in which:
- Figure 1: shows a device, known from the prior art, for receiving a subas- sembly assigned to an optical fibre cable and for fastening the subassembly received on the device to a mounting, in a side view;
- Figure 2: shows a device according to the invention for receiving a subas- sembly assigned to an optical fibre cable and for fastening the subassembly received on the device to a mounting, in a per- spective view;
- Figure 3: shows the device of Figure 2 in a side view;
- Figure 4: shows the detail IV of Figure 2;
- Figure 5: shows the detail V of Figure 2;
- Figure 6: shows the device of Figure 2 together with an optical fibre cable and with a subassembly which is assigned to the optical fibre cable and is received on the device;
- Figure 7: shows the detail VI of Figure 6; and
- Figure 8: shows the detail of Figure 7 in a perspective view.

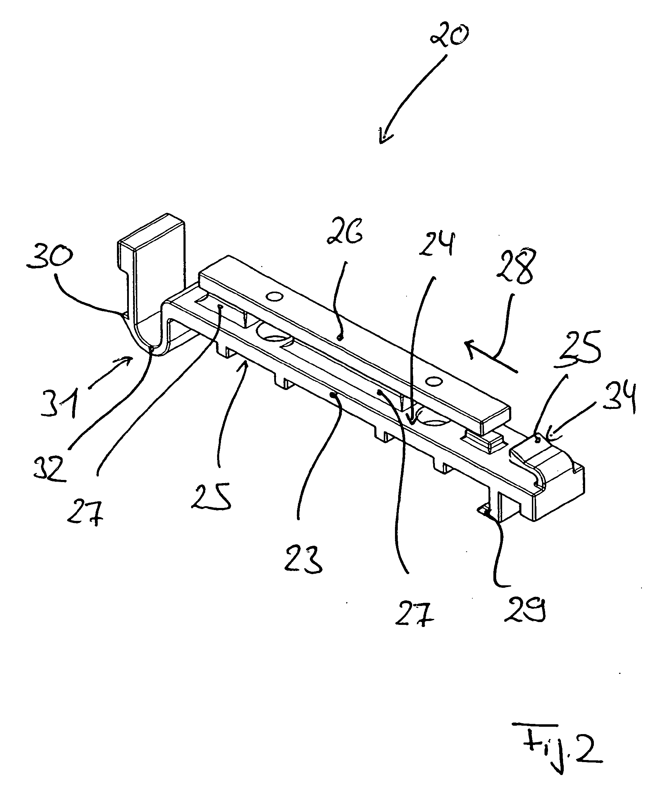

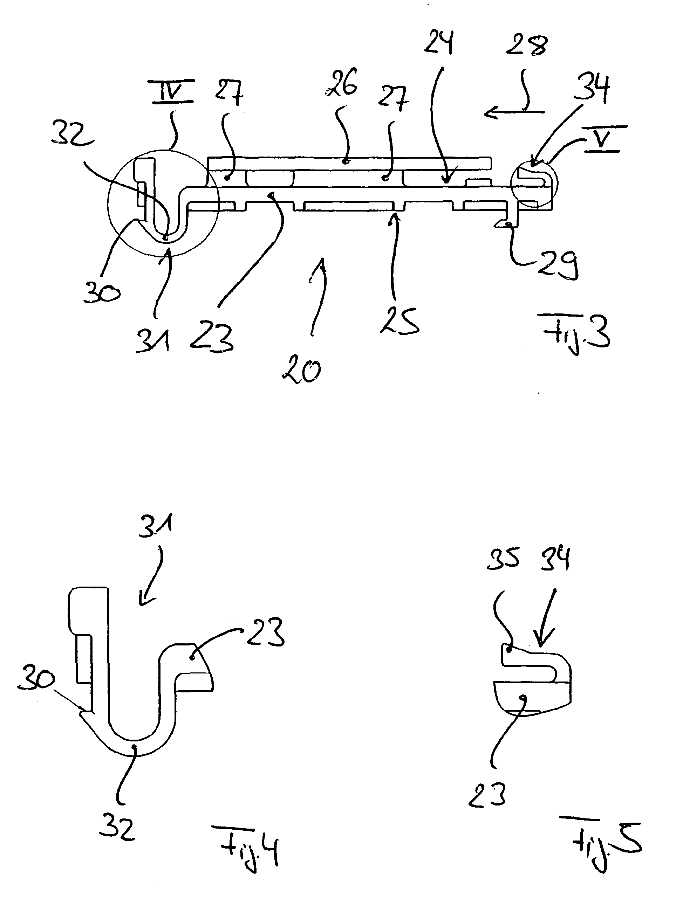

Figures 2 and 3 show different views of a device 20 according to the invention for receiving a subassembly, such as, for example, a plug or a socket or a furcation adaptor, assigned to an optical fibre cable and for fastening the subassembly received on the device 20 to a mounting, such as, for example, a wall of a distribution panel or distribution cabinet, via the device.

Figures 4 and 5 show details of the device 20 according to the invention.

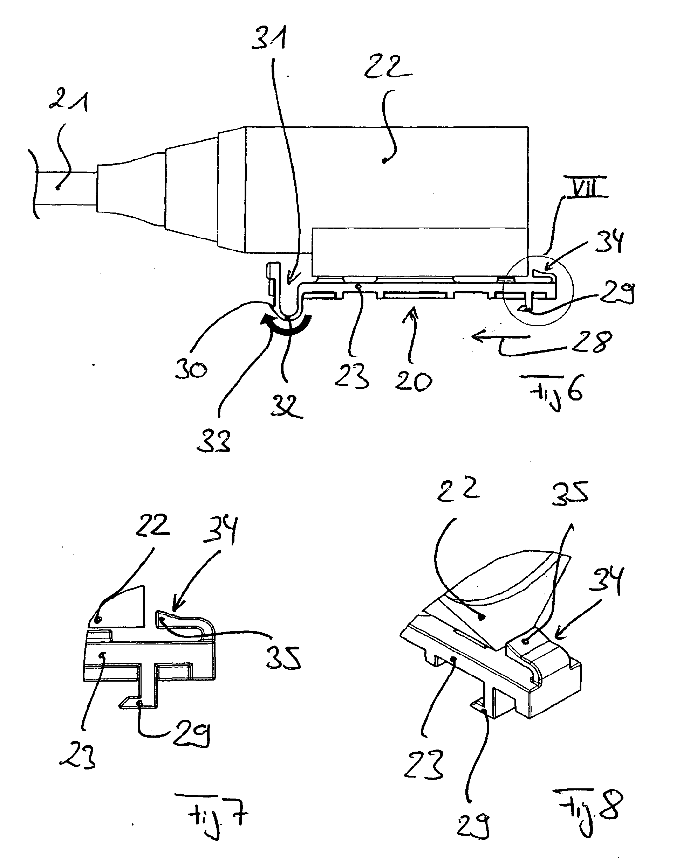

Figures 6 to 8 show the device 20 according to the invention in each case together with a subassembly 22 which is assigned to an optical fibre cable 21 and which is received on the device 20 according to the invention, the subassembly 22, shown in Figures 6 to 8, which is assigned to the optical fibre cable 21, being what is known as a furcation adaptor.

The device 20 according to the invention has a bar-shaped basic body 23 with a topside 24 and with an underside 25. On the topside 24 of the bar-shaped basic body 23, a guide rail 26 is formed, which extends approximately parallel to the bar-shaped basic body 23 and which is connected to the latter via portions 27.

The subassembly 22, shown in Figure 6, which is assigned to the optical fibre cable 21 can be pushed onto the guide rail 26 in the direction of the arrow 28 shown in Figure 2, for this purpose the guide rail 26 engaging into a groove, not illustrated in detail, which is formed on the subassembly 22. The arrow 28 therefore indicates the direction in which the subassembly 22 assigned to the optical fibre cable 21 is pushed onto the guide rail 26 of the device 20 according to the invention.

At mutually opposite ends of the bar-shaped basic body 23, anchoring elements 29 and 30 are formed, via which the device 20 according to the invention can be fastened to a mounting, in particular a wall of a distribution panel or distribution cabinet, specifically in such a way that, in this case, the anchoring elements 29, 30 can be introduced in a barb-like manner into recesses of the mountings and thus project into the recesses of the mounting.

The anchoring element 30 positioned at the front end of the bar-shaped basic body 23, as seen in the push-on direction 28, is in this case formed as part of a stop 31 of U-shaped cross section, the stop 31 being effective, as seen in the push-on direction 28, as a stop for the subassembly 22 of the optical fibre cable 11.

According to this invention, the stop 31 of U-shaped cross section is designed in such a way that a closed portion 32 of the latter is formed on the underside 25 of the bar-shaped basic body 23 or projects with respect to the underside 25 of the bar-shaped basic body 23. By contrast, the stop 31 of U-shaped cross section is designed to be open in the region of the topside 24 of the bar-shaped basic body 23.

When the device 20 according to the invention, together with a subassembly 22 received on the latter and assigned to the optical fibre cable 21, is to be fastened to a mounting, the stop 31 of U-shaped cross section engages with the closed portion 32 into a recess of the mounting.

When a force is exerted on the stop 31 in the push-on direction 28 via the optical fibre cable 21 or via the subassembly 22 assigned to the optical fibre cable 21, the stop 31 of U-shaped cross section is subjected, according to Figure 6, to a deformation in the direction of the arrow 33, with the result that the bar-shaped body 23 ultimately arches and the anchoring elements 29, 30 of the latter are clamped in the region of the recesses of the mountings.

There is then no risk that the anchoring elements 29, 30 jump out of the recesses of the mountings inadvertently and the device 20 comes loose from the mounting inadvertently.

According to an advantageous development of the invention, in the region of the topside 24 of the bar-shaped basic body 23, an elastically deformable stop 34 acting opposite to the push-on direction 28, for the subassembly 22 assigned to the optical fibre cable 21 is formed at the rear end of the basic body 23, as seen in the push-on direction 28.

The stop 34 acting opposite to the push-on direction 28 can be elastically deformed or pressed in the direction of the topside 24 of the basic body 23 both in order to push the subassembly 22 assigned to the optical fibre cable 21 onto the guide rail 26 and in order to remove the same from the guide rail 26.

At the free end of the elastically deformable stop 34, the latter has a ramp-shaped projection 35, which, according to Figures 7 and 8, when the subassembly 22 is pushed onto the device 20, covers a contour of the subassembly 22 in regions, so that, when a force is exerted opposite to the push-on direction 28 on the optical fibre cable 21 or the subassembly 22, the subassembly 22 presses against the ramp-shaped projection 35 of the stop 34 and thus prevents the situation where the subassembly 22 can be inadvertently pushed off from the guide rail 26.

If the subassembly 22 is to be intentionally removed from the device 20, the ramp-shaped projection 35 of the stop 34 is suppressed in the direction of the topside 24, specifically in such a way that it is pressed under the contour of the subassembly 22 and therefore does not obstruct the removal of the subassembly 22 from the device 20. When the subassembly 22 is pushed onto the device 20 or the guide rail 26 of the latter, the ramp-shaped projection 35 of the stop 34 is likewise pressed under the contour of the subassembly 22, while, after the subassembly 22 has been pushed completely onto the device 20, the stop 34 returns automatically, and the ramp-like projection 35 then once again partially covers the contour of the subassembly 22.

The subassembly 22 can be attached to the device 10 and removed from the device 10 before and after the device 10 has been fastened to the mounting.

### List of reference signs

- 10: device
- 11: basic body
- 12: topside
- 13: underside
- 14: guide rail
- 15: push-on direction
- 16: anchoring element
- 17: anchoring element
- 18: stop
- 20: device
- 21: optical fibre cable
- 22: subassembly
- 23: basic body
- 24: topside
- 25: underside
- 26: guide rail
- 27: portion
- 28: push-on direction
- 29: anchoring element
- 30: anchoring element
- 31: stop
- 32: portion
- 33: arrow
- 34: stop
- 35: projection

## Claims

1. Device for receiving a subassembly, in particular a plug or a socket or a furcation adaptor, assigned to an optical fibre cable and for fastening the subassembly received on the device to a mounting, in particular to a wall of a distribution panel or distribution cabinet, via the device, the device comprising a bar-shaped basic body (23), there being formed on a topside of the basic body a guide rail (26), onto which, to receive the subassembly assigned to the optical fibre cable, the latter can be pushed, there being formed on an underside, in the region of mutually opposite ends of the basic body, anchoring elements (29, 30), via which the device can be introduced into recesses of the mounting, and the anchoring element (30), which is assigned to a front end of the basic body (23) as seen in the push-on direction of the subassembly, being an integral part of a stop (31) of U-shaped cross section, acting in the push-on direction, for the subassembly, **characterized in that** the stop (31) of U-shaped cross section is designed in such a way that a closed portion (32) of the U-shaped stop (31) on the underside (25) of the basic body (23) projects with respect to the latter, in such a way that, when the subassembly received on the device is fastened to the mounting, the closed portion (32) of the U-shaped stop (31) can be introduced into a recess of the mounting, and that in the region of the topside (24) of the basic body (23), an elastically deformable stop (34), acting opposite to the push-on direction, for the subassembly is formed at a rear end of the basic body (23), as seen in the push-direction of the subassembly.

2. Device according to Claim 1, **characterized in that**, to push the subassembly assigned to the optical fibre cable onto the guide rail (26), the stop (34) acting opposite to the push-on direction can be pressed elastically in the direction of the topside (24) of the basic body (23).

3. Device according to Claim 1 or 2, **characterized in that**, to remove the subassembly assigned to the optical fibre cable from the guide rail (26), the stop (34) acting opposite to the push-on direction can be pressed elastically in the direction of the topside (24) of the basic body (23).

4. Device according to Claim 2 or 3, **characterized in that**, in this case, a ramp-shaped projection (35) of the stop (34) can be pressed under a contour of the subassembly to be pushed on or to be removed, so that the stop (34) does not obstruct the pushing or removal of the subassembly assigned to the optical fibre cable onto or from the guide rail (26), the ramp-shaped projection (35) of the stop (34) subsequently returning automatically, so that, when the subassembly is pushed onto the guide rail (26), the ramp-shaped projection (35) partially covers the contour of the pushed-on subassembly and forms the stop (34), acting opposite to the push-on direction, for the subassembly.

## Patentansprüche

1. Vorrichtung zur Aufnahme einer Unteranordnung, insbesondere eines Steckers oder einer Buchse oder eines Aufteiladapters, die einem Glasfaserkabel zugeordnet ist, und zum Befestigen der an der Vorrichtung aufgenommenen Unteranordnung an einer Halterung, insbesondere an einer Wand einer Verteilertafel oder eines Verteilerschranks, über die Vorrichtung, wobei die Vorrichtung einen stangenförmigen Grundkörper (23) umfasst, wobei auf einer Oberseite des Grundkörpers eine Führungsschiene (26) ausgebildet ist, auf die zur Aufnahme der dem Glasfaserkabel zugeordneten Unteranordnung ersteres aufgeschoben werden kann, wobei auf einer Unterseite im Bereich einander gegenüberliegender Enden des Grundkörpers Verankerungselemente (29, 30) ausgebildet sind, über die die Vorrichtung in Aussparungen der Halterung eingeführt werden kann, und das Verankerungselement (30), das einem vorderen Ende des Grundkörpers (23), mit Blickrichtung in Aufschieberichtung der Unteranordnung, zugeordnet ist, ein integraler Teil eines Anschlags (31) mit U-förmigem Querschnitt, der in Aufschieberichtung wirkt, für die Unteranordnung ist, **dadurch gekennzeichnet, dass** der Anschlag (31) mit U-förmigem Querschnitt so ausgeführt ist, dass ein geschlossener Teil (32) des U-förmigen Anschlags (31) auf der Unterseite (25) des Grundkörpers (23) bezüglich des letzteren vorragt, so dass, wenn die auf der Vorrichtung aufgenommene Unteranordnung an der Halterung befestigt wird, der geschlossene Teil (32) des U-förmigen Anschlags (31) in eine Aussparung der Halterung eingeführt werden kann, und dass im Bereich der Oberseite (24) des Grundkörpers (23) ein elastisch verformbarer Anschlag (34), der entgegensetzt zu der Aufschieberichtung wirkt, für die Unteranordnung an einem hinteren Ende des Grundkörpers (23), mit Blickrichtung in Aufschieberichtung der Unteranordnung, ausgebildet ist.

2. Vorrichtung nach Anspruch 1, **dadurch gekennzeichnet, dass** zum Aufschieben der dem Glasfaserkabel zugeordneten Unteranordnung auf die Führungsschiene (26) der entgegengesetzt zu der Aufschieberichtung wirkende Anschlag (34) elastisch in der Richtung der Oberseite (24) des Grundkörpers (23) gedrückt werden kann.

3. Vorrichtung nach Anspruch 1 oder 2, **dadurch gekennzeichnet, dass** zum Entfernen der dem Glasfaserkabel zugeordneten Unteranordnung von der Führungsschiene (26) der entgegengesetzt zu der Aufschieberichtung wirkende Anschlag (34) elastisch in der Richtung der Oberseite (24) des Grundkörpers (23) gedrückt werden kann.

4. Vorrichtung nach Anspruch 2 oder 3, **dadurch gekennzeichnet, dass** in diesem Fall ein rampenförmiger Vorsprung (35) des Anschlags (34) unter einer Kontur der zu schiebenden oder zu entfernenden Unteranordnung gedrückt werden kann, so dass der Anschlag (34) das Schieben oder Entfernen der dem Glasfaserkabel zugeordneten Unteranordnung auf die oder von der Führungsschiene (26) nicht behindert, wobei der rampenförmige Vorsprung (35) des Anschlags (34) anschließend automatisch zurückkehrt, so dass der rampenförmige Vorsprung (35), wenn die Unteranordnung auf die Führungsschiene (26) geschoben wird, die Kontur der aufgeschobenen Unteranordnung teilweise bedeckt und den Anschlag (34), der entgegengesetzt zu der Aufschieberichtung wirkt, für die Unteranordnung bildet.

## Revendications

1. Dispositif pour recevoir un sous-ensemble, en particulier une prise ou une douille ou un adaptateur de furcation, affecté à un câble de fibre optique, et pour attacher le sous-ensemble reçu sur le dispositif à un support de montage, en particulier une paroi d'un tableau de distribution ou d'une armoire de distribution, par le biais du dispositif, le dispositif comprenant un corps de base en forme de barre (23), le corps de base présentant, sur son côté supérieur, un rail de guidage (26) sur lequel, pour recevoir le sous-ensemble affecté au câble à fibre optique, ce dernier peut être poussé, et sur son côté inférieur, dans la région d'extrémités mutuellement opposées du corps de base, des éléments d'ancrage (29, 30), par le biais desquels le dispositif peut être introduit dans des évidements du support de montage, et l'élément d'ancrage (30), qui est affecté à une extrémité avant du corps de base (23), vu dans la direction d'enfoncement du sous-ensemble, faisant partie intégrale d'une butée (31) de section transversale en forme de U agissant dans la direction d'insertion, pour le sous-ensemble, **caractérisé en ce que** la butée (31) de section transversale en forme de U est conçue de telle sorte qu'une portion fermée (32) de la butée en forme de U (31) sur le côté inférieur (25) du corps de base (23) fasse saillie par rapport à ce dernier de telle sorte que lorsque le sous-ensemble reçu sur le dispositif est attaché au support de montage, la portion fermée (32) de la butée en forme de U (31) puisse être introduite dans un évidement du support de montage, et **en ce que** dans la région du côté supérieur (24) du corps de base (23), une butée déformable élastiquement (34), agissant dans la direction opposée à la direction d'enfoncement, pour le sous-ensemble, est formée au niveau d'une extrémité arrière du corps de base (23), vu dans la direction d'enfoncement du sous-ensemble.

2. Dispositif selon la revendication 1, **caractérisé en ce que** pour pousser le sous-ensemble affecté au câble à fibre optique sur le rail de guidage (26), la butée (34) agissant dans la direction opposée à la direction d'enfoncement peut être pressée élastiquement dans la direction du côté supérieur (24) du corps de base (23).

3. Dispositif selon la revendication 1 ou 2, **caractérisé en ce que**, pour enlever le sous-ensemble affecté au câble à fibre optique du rail de guidage (26), la butée (34) agissant dans la direction opposée à la direction d'enfoncement peut être pressée élastiquement dans la direction du côté supérieur (24) du corps de base (23).

4. Dispositif selon la revendication 2 ou 3, **caractérisé en ce que** dans ce cas, une saillie en forme de rampe (35) de la butée (34) peut être pressée sous un contour du sous-ensemble à enfoncer ou à enlever, de telle sorte que la butée (34) ne gêne pas l'enfoncement ou le retrait du sous-ensemble affecté au câble à fibre optique sur ou depuis le rail de guidage (26), la saillie en forme de rampe (35) de la butée (34) revenant ensuite automatiquement de telle sorte que lorsque le sous-ensemble est poussé sur le rail de guidage (26), la saillie en forme de rampe (35) recouvre partiellement le contour du sous-ensemble enfoncé et forme la butée (34), agissant dans la direction opposée à la direction d'enfoncement, pour le sous-ensemble.
